# EUROPÄISCHE PATENTSCHRIFT

(11) **EP 1 675 769 B1**
(45) Veröffentlichungstag und Bekanntmachung des Hinweises auf die Patenterteilung: **09.05.2007**
(21) Anmeldenummer: 04761970.5
(22) Anmeldetag: 19.10.2004
(51) Int. Cl.: B64D 10/00, A62B 17/00

(54) **HÖHENSCHUTZ-VORRICHTUNG**
ALTITUDE PROTECTION DEVICE
DISPOSITIF D'ALTITUDE

(30) Priorität: 22.10.2003 CH 179803
(43) Veröffentlichungstag der Anmeldung: 05.07.2006
(73) Patentinhaber: LSS Life Support Systems AG, 8152 Dietikon (CH)
(72) Erfinder: EGLI, Wendelin, CH-8472 Seuzach (CH); REINHARD, Andreas, CH-8001 Zürich (CH); WULF, Reinhard, 22119 Hamburg (DE); SCHMIEDING, Dirk, 25474 Ellerbeck (DE)
(74) Vertreter: Salgo, Reinhold Caspar
(86) Internationale Anmeldenummer: PCT/CH2004/000630
(87) Internationale Veröffentlichungsnummer: WO 2005/037645

(56) Entgegenhaltungen:
- EP-A- 0 983 190
- WO-A-03/020586
- US-A- 3 345 641
- US-A- 3 392 405

## Beschreibung

Die vorliegende Erfindung betrifft eine Vorrichtung zum Höhenschutz von Piloten und weiteren Besatzungsmitgliedern von Hochleistungsflugzeugen. Insbesondere betrifft diese Vorrichtung zum Höhenschutz Träger von Beschleunigungsschutzanzügen nach dem hydrostatischen Prinzip.

Eine Höhenschutz-Vorrichtung ist dann notwendig, wenn der Pilot - und die allfälligen weiteren Besatzungsmitglieder - einem plötzlichen Druckverlust im Cockpit eines in einer Höhe von über 12'200 m.ü.M. (FL400 = Flight Level 40'000 ft) fliegenden Flugzeuges ausgesetzt sind. Sei es, dass ein technischer Defekt zum Druckverlust führt, dass die Cockpitabdeckung zerstört oder verlorengegangen ist, oder dass ein Notausstieg notwendig wird. In all diesen Situationen bricht die Druckstabilisierung im Cockpit, die üblicherweise einem Luftdruck auf etwa 2'000 m.ü.M. (FL65) entspricht, zusammen. Je grösser die Flughöhe bei einem solchen genannten Ereignis ist, desto näher kommt der druckabhängige Siedepunkt von wässrigen Lösungen an die tatsächliche Körpertemperatur von etwa 37°C des Piloten. Neben Gasen, welche sich in den Gedärmen ausdehnen, und auch trotz schnellem Abstieg auftretender Dekompressions-Krankheit ist jedoch Hypoxie, also eine Sauerstoffunterversorgung, die primäre akute Gefahr, gegen welche Schutzvorkehrungen getroffen werden müssen. Selbst bei Atmung reinen Sauerstoffs reicht der 02-Partialdruck bei Höhen über 12'200 m.ü.M. (FL400) nicht mehr aus, um eine Hypoxie zu verhindern. Die Zeitspanne, während derer das Bewusstsein nützliche Handlungen zulässt, beträgt in dieser Höhe etwa 1.5 bis 20 min. 1000 m höher, in einer Höhe von 13'100 m.ü.M. (FL430) beträgt diese Zeitspanne nur noch 9 bis 12 s. Um einer drohenden Hypoxie zu begegnen, kann reiner Sauerstoff geatmet werden, unter Umständen sogar unter höherem Druck als der Umgebungsdruck. In diesem Zusammenhang wird von PBA, Druckatmung zum Höhenschutz gesprochen, im Gegensatz zur neueren PBG, Druckatmung zum Beschleunigungsschutz (PPB = positive pressure breathing, PBA = pressure breathing for altitude protection, PBG = pressure breathing for acceleration protection). In einer Höhe von über 15'200 m.ü.M. (FL500) ist die Druckatmung von geringem Wert, da es physiologisch unmöglich ist, den notwendigen positiven Druck zur Verhinderung einer schweren Hypoxie ohne Gegendruck auszuhalten. Aus diesem Grund müssen Personen spätestens ab dieser Flughöhe mit einem Druckanzug oder einem Höhenschutz ausgerüstet sein, welcher im Falle eines plötzlichen Druckverlustes in der Kabine den Körper sofort wieder unter erhöhten Druck setzt.

WO 03/020586 offenbart eine Höhenschutz-Vorrichtung, welche in einen Beschleunigungsschutzanzug nach dem hydrostatischen Prinzip integriert ist und bei plötzlichem Druckabfall den Körper des Trägers durch Erhöhen der Umfangsspannung unter Druck setzt. Diese Anmeldung stellt den nächsten Stand der Technik dar und entspricht dem Oberbegriff des Anspruchs 1.

In der oben erwähnten Anmeldung wird ein Ventil verwendet, welches sich bei plötzlichen, grossen Druckveränderungen sofort schliesst. Ein solches Bauteil ist teuer, erfordert einen erheblichen Wartungsaufwand zur Gewährleistung seiner Funktionstüchtigkeit und erhöht dennoch die Störanfälligkeit der ganzen Höhenschutz-Vorrichtung. Diese Vorrichtung mit Ventil hat zudem die Eigenart, dass die Schutzfunktion im Unglücksfall aktiviert werden muss und nicht vom Start bis zur Landung permanent besteht. Bei einem langsamen kontinuierlichen Druckverlust infolge eines kleineren Lecks in der Hülle der Druckkabine, wird ein lediglich auf schnelle Druckänderungen reagierendes Ventil beispielsweise nicht schliessen und der Höhenschutz muss von Hand oder durch ein anderes System aktiviert werden.

Die Aufgabe der vorliegenden Erfindung ist die Schaffung einer ergänzenden Einrichtung zu einem Beschleunigungsschutzanzug (fortan G-Anzug), welche die Verbindung mit diesem G-Anzug einen für die genannten Fälle wirksamen Höhenschutz zu leisten vermag in Verbindung mit einer unwesentlichen Massenzunahme des G-Anzuges. Ferner soll der technische und wirtschaftliche Aufwand dafür möglichst klein sein, insbesondere soll auf Ventile oder andere technische Vorrichtungen zur Aktivierung der Schutzfunktion im Augenblick eines Druckverlustes verzichtet werden.

Die Lösung der gestellten Aufgabe ist wiedergegeben im kennzeichnenden Teil des Patentanspruches 1 hinsichtlich ihrer wesentlichen Merkmale, in den weiteren Patentansprüchen hinsichtlich weiterer vorteilhafter Ausbildungen.
Anhand der beigefügten Zeichnungen wird der Erfindungsgegenstand näher erläutert.
Es zeigen
- Fig. 1a: schematische Darstellungen eines ersten Ausführungsbeispiels im Querschnitt in Bauchhöhe unter Druck auf Meereshöhe,
- Fig. 1b: schematische Darstellungen eines ersten Ausführungsbeispiels im Querschnitt in Bauchhöhe mit beginnender Erhöhung der Umfangsspannung des G-Anzugs,
- Fig. 1c: schematische Darstellungen eines ersten Ausführungsbeispiels im Querschnitt in Bauchhöhe bei maximaler Ausdehnung beider Blasen,
- Fig. 2a,b: Querschnitte durch ein erstes Ausführungsbeispiel einer Blase im ausgedehnten und entspannten Zustand,
- Fig. 3a,b,c: Querschnitte durch ein zweites Ausführungsbeispiel einer Blase im entspannten, ausgedehnten und maximal ausgedehnten Zustand,
- Fig. 4: einen Querschnitt durch ein drittes Ausführungsbeispiel einer Blase mit zusätzlichem Gasreservoir.

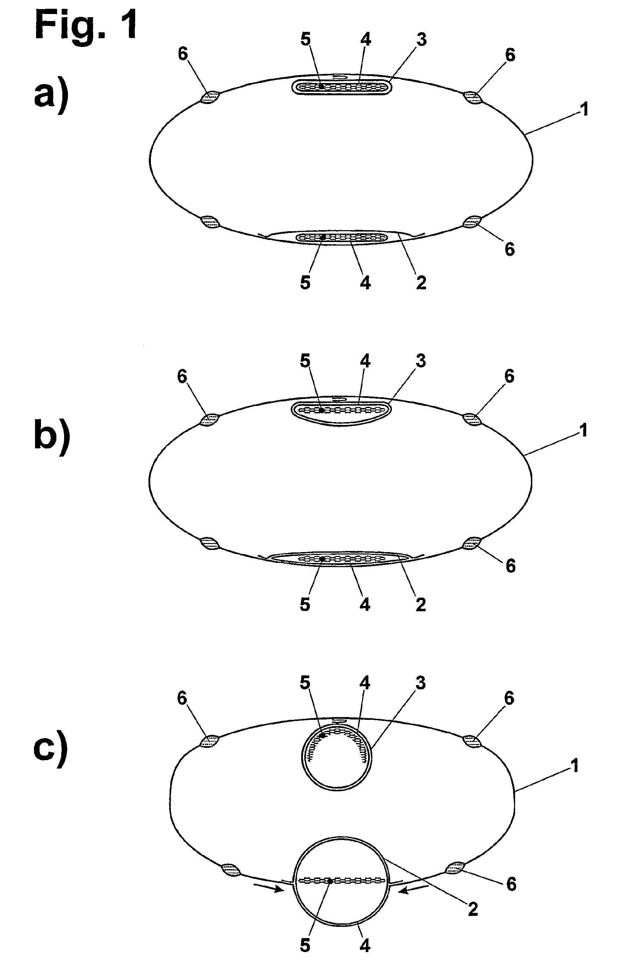

Ein erstes Ausführungsbeispiel des Erfindungsgedankens ist in Fig. 1a,b,c schematisch dargestellt. Sie zeigen einen Querschnitt durch die Bauchpartie eines G-Anzuges 1 nach dem hydrostatischen Prinzip, beispielsweise nach EP 0 983 190. Dieser weist beispielsweise vier flüssigkeitsgefüllte Adern 6 auf, je zwei auf der Vorderseite und auf der Rückseite des G-Anzuges 1. Diese Adern 6 erstrecken sich von der Schulterpartie des G-Anzuges 1 bis zu den Knöcheln und bauen jeweils den der aktuellen Beschleunigungsbelastung entsprechenden hydrostatischen Druck auf. Dabei verformen sich die Adern 6 von einem im Wesentlichen flach linsenförmigen Querschnitt zu einem runden und spannen dabei das zugfeste und dehnungsarme Gewebe des G-Anzuges 1. Über die in diesem Gewebe dadurch herrschenden Zugspannung wird auf den Körper des Trägers ein seinem Binnendruck entsprechender Aussendruck aufgebaut.

Fig. 1a zeigt die Höhenschutz-Vorrichtung bei Atmosphärendruck auf Meereshöhe. Im dargestellten ersten Ausführungsbeispiel ist in der Rückenpartie des G-Anzuges 1 eine Tasche 2 kraftschlüssig befestigt, beispielsweise durch Vernähen, bestehend aus einem Gewebe mit vergleichbaren Eigenschaften, wie jenem des G-Anzuges 1. In diese Tasche 2 ist eine Blase 4 eingelegt. Diese Blase 4, aus einem elastischen Kunststoff, beispielsweise PU oder PVC gefertigt, ist nach aussen allseitig abgeschlossen. Die Ausdehnung der Blase 4 wird durch die Tasche 2 begrenzt. Mit steigendem Druck in der Blase 4 nimmt die Tasche 2 allmählich ihr Maximalvolumen mit einem kreisförmigen Querschnitt an und somit erhöht sich durch Verkürzung des Umfangs des G-Anzugs 1 die Umfangsspannung. Daher wird die Tasche 2 fortan zur besseren Unterscheidung als Spannungstasche 2 bezeichnet. Die einfachste Form einer Spannungstasche 2 besteht, wie in Fig. 1 gezeigt, aus einem auf der Innenseite des G-Anzugs 1 flach aufliegenden und entlang seiner Ränder mit dem G-Anzug 1 vernähten Gewebestück. Dadurch bildet ein Teil des G-Anzuges 1 zusammen mit dem zusätzlichen Gewebestück eine Spannungstasche 2. Es ist jedoch auch denkbar und erfindungsgemäss, eine geschlossene Tasche auf der Aussen- oder Innenseite des G-Anzuges 1 kraftschlüssig zu befestigen. Diese Tasche kann flach aufgelegt nur an den Rändern befestigt werden, beispielsweise durch Nähen oder Kleben, oder es kann die ganze auf dem G-Anzug 1 liegende Fläche mit diesem verbunden werden.

Auf der Frontseite des G-Anzuges 1 ist innen eine Tasche 3 befestigt, beispielsweise entlang einer senkrecht auf der Spannungsrichtung stehenden Linie oder an einigen auf dieser Linie liegenden Punkten. Die Befestigung erfolgt so, dass ein Ausdehnen der inliegenden Blase 4 im Wesentlichen keinen Einfluss auf die Umfangsspannung des G-Anzuges 1 hat, sondern dass eine aufgeblähte Tasche 3 primär einen lokalen Druck auf den im G-Anzug 1 steckenden Körper, genauer auf dessen Weichteile in der Bauchhöhle, ausübt. Die Tasche 3 wird deshalb fortan Drucktasche 3 genannt. Die Befestigung der Drucktasche 3 dient lediglich ihrer Positionierung am gewünschten Ort und muss weniger grosse Spannungen aufnehmen als die Befestigung der Spannungstasche 2. Der Erfindungsgedanke schliesst Ausführungen mit jeweils mehreren nebeneinander angeordneten Drucktaschen 3 oder Spannungstaschen 2 mit ein.

In beide Blasen 4, sowohl in der Spannungstasche 2 als auch in der Drucktasche 3, sind eine oder mehrere Lagen eines Distanzgewirkes oder -gewebes 5 eingelegt. Solche Distanzgewirke 5 - mindestens teilweise aus Monofil-Material hergestellt - sind sehr flexibel und verformbar und behalten dabei auch bei Flächenbelastung ihre Dicke bei. Durch die Grösse und die Dicke des Distanzgewirkes 5 wird in der Blase 4 ein Minimalvolumen definiert, welches von der entspannten Blase 4 auf Basishöhe, beispielsweise Meereshöhe, eingenommen wird.

Die Cockpits von Kampfflugzeugen sind als Druckkabinen ausgebildet. Beim Steigflug des Flugzeuges wird der Aussendruck ausgeglichen bis in eine Flughöhe von etwa 2'000 m.ü.M. (FL65) Darüber wird der Innendruck konstant gehalten. Der eigentliche Höhenschutz-Fall tritt ein, wenn der einem Atmosphärendruck auf FL65 entsprechende Kabinendruck auf den Umgebungsdruck des Flugzeugs abfällt. Dies ist der Fall beispielsweise
- bei plötzlichem Versagen der Kabinendruckversorgung,
- bei Beschädigung der Druckzelle,
- bei Verlust oder Beschädigung der Cockpitabdeckung oder
- bei einem Notausstieg mittels Schleudersitz.

In solchen Höhenschutz-Fällen dehnen sich die luftdichten Blasen 4 aus, bis das Druckgleichgewicht mit ihrer Umgebung wiederhergestellt ist. Dabei haben die Spannungstasche 2 und die Drucktasche 3 unterschiedliche Wirkungen auf den Organismus des Trägers des G-Anzugs 1.

Fig. 1b zeigt die Höhenschutz-Vorrichtung bei einem Atmosphärendruck entsprechend einer Höhe von 5'500 m.ü.M. (FL180). Die Blase 4 in der Drucktasche 3 weist bei diesem Druck ungefähr das doppelte Volumen im Vergleich zur Meereshöhe auf. Dadurch übt die Drucktasche eine geringe Druckkraft auf die Bauchhöhle des Trägers aus und unterstützt dadurch die Druckatmung. Auf die Umfangsspannung des G-Anzuges 1 hat diese Ausdehnung keinen wesentlichen Einfluss.

Die Spannungstasche 2 auf dem Rücken des G-Anzuges 1 ist bei dieser Höhe gerade ausgefüllt. Die Ausdehnung der in ihr platzierten Blase 4 führt ebenfalls zu einer geringen Druckerhöhung im Innern des G-Anzuges 1, jedoch noch zu keiner wesentlichen Erhöhung der Umfangsspannung des G-Anzuges. Bei weiter abnehmendem Umgebungsdruck wirkt die Spannungstasche 2 mit der darin expandierenden Blase 4 als linearer Aktor, deren Querschnitt allmählich kreisförmig wird und die Umfangsspannung des G-Anzuges 1 durch Verkürzung des Umfangs erhöht.

Fig. 1c zeigt die Höhenschutz-Vorrichtung mit maximaler Wirkung bei einem Atmosphärendruck, wie er bei Dienstgipfelhöhe des Luftfahrzeuges herrscht, beispielsweise auf einer Höhe von 19'800 m.ü.M. (FL650). Beide Blasen 4 füllen ihre Taschen 2,3 vollständig aus und werden durch dieselben am weiteren Ausdehnen gehindert, auch bei weiterem Absinken des Umgebungsdruckes.

Die in diesem ersten Ausführungsbeispiel angegebene Höhe, bei welcher die Spannungstasche 2 als Aktor zu wirken beginnt, ist ein physiologisch sinnvolles Beispiel, aber auf keinen Fall zwingend. Das Besatzungsmitglied soll im Normalbetrieb, bei geregeltem Kabinendruck durch die Höhenschutzvorrichtung nicht beeinträchtigt werden und über volle Mobilität verfügen. Im Erfindungsgedanken enthalten sind auch andere Ausführungsbeispiele mit anderem Verhalten bei Durchlaufen einer Druckveränderung. Die Volumenverhältnisse von Taschen 2,3 und Blasen 4 können an verschiedene Luftfahrzeuge mit unterschiedlichen Kabinendruckhöhen und Dienstgipfelhöhen adaptiert werden. Die Blasen 4 müssen nicht zwingend bei demselben Druck ihr Maximalvolumen erreichen.

Der Höhenschutz erbringt höhenangepasst die zur Verhinderung einer Hypoxie notwendigen Leistungen. Beispielsweise bis auf eine Höhe von 5'500 m.ü.M. wird zunehmend die Druckatmung unterstützt, mittels Erhöhung des Druckes in Bauchhöhle und

Lungen. Ab dieser Höhe setzt bei weiter sinkendem Umgebungsdruck zusätzlich eine direkte Kompression des Oberkörperbereiches durch die als Fluidmuskel oder linearer Aktor wirkende Spannungstasche 2 ein und eine indirekte Kompression im ganzen Bereich des G-Anzuges 1, welche sich über die flüssigkeitsgefüllten, zusätzlich gespannten Adern 6 ausbreitet. Der im gesamten Bereich des G-Anzuges 1 erhöhte Umgebungsdruck wirkt auch dem Dekompressions-Syndrom und in Höhen ab 19'200 m.ü.M. (FL630) dem Ebullismus, dem Ausgasen von Körperflüssigkeiten, entgegen. Gewisse Flugzeuge erreichen Dienstgipfelhöhen von bis zu 23'000 m.ü.M. (FL750).

Die Blasen 4 können als geprüfte Einwegartikel ausgeführt werden, was die Höhenschutz-Vorrichtung bei im Wesentlichen Wartungsfreiheit äusserst störungssicher macht.

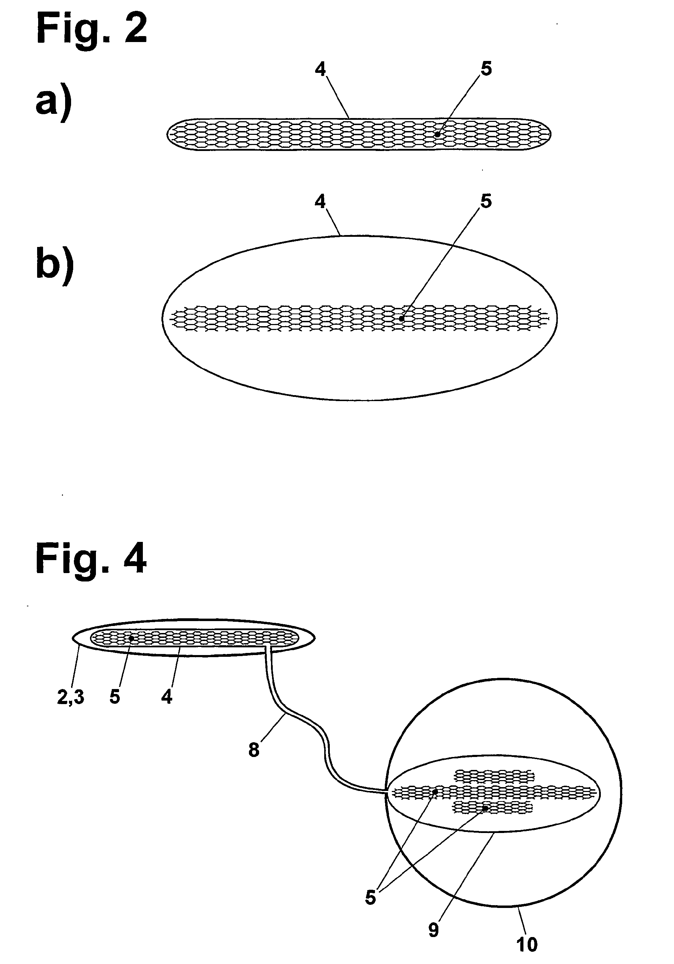

Fig. 2 zeigt ein erstes Ausführungsbeispiel einer Blase 4. Diese Blase 4 ist aus elastischem Material gefertigt, beispielsweise PU. Das integrierte Distanzgewirk 5 definiert ein Minimalvolumen Luft oder Gas, welches von der Blase 4 im entspannten Zustand eingenommen wird, wie in Fig. 2a dargestellt. Der Druck im Innern der Blase entspricht auf einer Basishöhe, beispielsweise Meereshöhe, dem Aussendruck und die Blase 4 liegt ungedehnt und entspannt eng am Distanzgewirk 5 an. Fig. 2b zeigt dieselbe Blase 4 in einer grösseren Höhe, also bei geringerem Aussendruck. Die elastische Blase 4 ist gedehnt und nimmt nun ein grösseres Volumen als das Minimalvolumen ein.

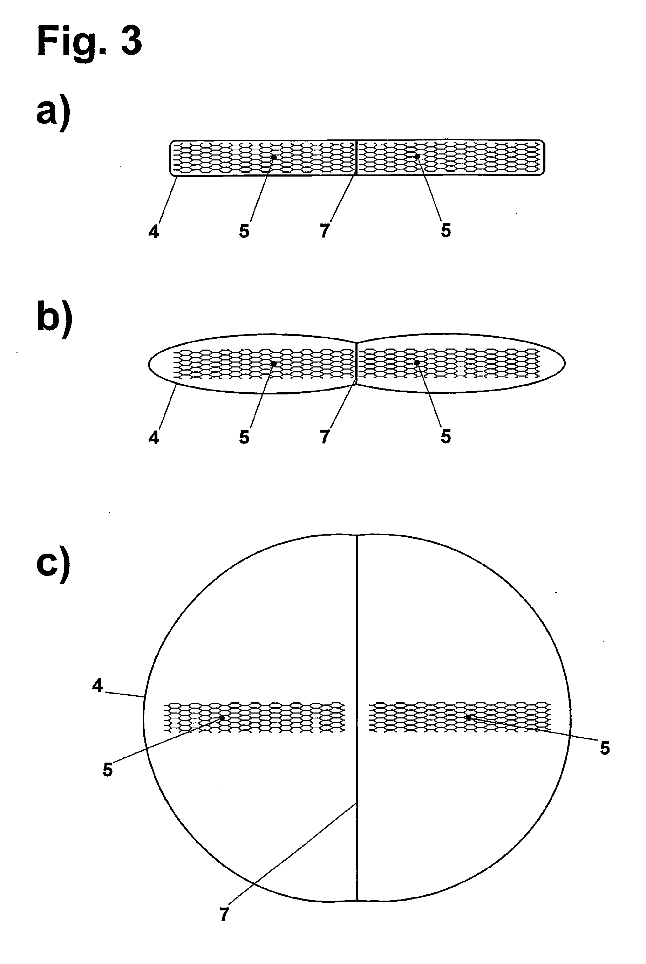

In Fig. 3 wird ein zweites Ausführungsbeispiel einer Blase 4 gezeigt. Ein elastischer Mittelsteg 7 ist in der Blase 4 angebracht. Der Mittelsteg 7 unterteilt die Blase 4 in zwei miteinander kommunizierende Kammern des gleichen Druckes mit je einem Distanzgewirk 5. Der Mittelsteg 7 führt zu einer verzögerten Ausdehnung der Blase 4 in der Stegebene. Die elastische Dehnung des Mittelsteges 7 setzt je nach Dicke und Ausführung erst ab einem definierbaren Umgebungsdruck ein. Fig. 3a zeigt die Variante mit Mittelsteg 7 im entspannten Zustand bei Druck auf Meereshöhe, Fig. 3b bei beginnender Dehnung des Mittelstegs 7 und Fig. 3c bei maximaler Ausdehnung der Blase 4 mit auf Durchmesserlänge gestrecktem Mittelsteg 7. Ein oder mehrere Mittelstege 7 oder andere punkt-oder linienförmige elastische Verbindungsteile der Ober- und Unterseite der Blase 4 können gezielt dazu benutzt werden, dem Atmosphärendruck nicht direkt proportionale Ausdehnungen der Drucktaschen 3 und der Spannungstaschen 2 zu bewirken.

Fig. 4 zeigt ein drittes Ausführungsbeispiel für eine Blase 4. Die Blase 4 ist mit einer unelastischen Leitung 8 mit einer Zusatzblase 9 verbunden. Diese Zusatzblase 9 ist in eine inelastische Zusatztasche 10 eingelegt. Diese Zusatztasche 10 ist kraftschlüssig mit der Leitung 8 verbunden. In der Zusatzblase 9 wird, wie in der Blase 4, durch Distanzgewirk 5 ein Minimalvolumen definiert. Die Zusatztasche 10 befindet sich ausserhalb des G-Anzuges 1. Die Elastizität der Zusatzblase 9 kann grösser sein als diejenige der Blase 4. Bei abnehmendem Umgebungsdruck expandiert zuerst die sehr elastische Zusatzblase 9 in die Zusatztasche 10 hinein. Die Blase 4 weist ein im Wesentlichen unverändertes Volumen auf. Sobald die Zusatzblase 9 ihr Maximalvolumen erreicht hat, also die Zusatztasche 10 vollständig ausfüllt, kann der weitere Druckausgleich nur noch über die Ausdehnung der Blase 4 erfolgen. Die Ausdehnung ist dort also verzögert und grösser als ohne Zusatzblase 9, da eine grössere Luftmenge wirksam ist, nämlich die Gasmenge, welche auf Basishöhe in den durch Distanzgewirke geöffneten Blasen 4,9, sowie in der Leitung 8 enthalten ist.

In einer Variante dieses Ausführungsbeispiels besteht das Zusatzvolumen einzig aus der beispielsweise als Kunststoff-Rohr ausgebildeten Leitung 8. Da das Zusatzvolumen fix durch ein festes inelastisches Rohr definiert wird, welches unter dem Einfluss der vorkommenden Kräfte und Spannungen kaum Querschnittsveränderungen erfährt, trägt die im Zusatzvolumen - oder in den Zusatzvolumina - enthaltene Gasmenge sofort und ohne Verzögerung voll zum Aufbau der durch die Blase 4 erzeugten Zugspannung bei. Die Zusatzvolumina werden aussen am G-Anzug 1 so angebracht, dass sie auch im aufgeblasenen Zustand die Bewegungsfreiheit des Trägers möglichst wenig einschränken und behindern.

Neben der einfachen und kostengünstigen Herstellungsweise des erfindungsgemässen Höhenschutzes hat dieser den grossen Vorteil, dass nicht ein weiteres Kleidungsstück, beispielsweise in Form einer Jacke notwendig ist, welches den Träger unnötig einengt, dass er energetisch und funktional autark ist und keinerlei Verbindungsleitungen zum Flugzeug oder Schleudersitz erfordert.

## Patentansprüche

1. Beschleunigungsschutzanzug nach dem hydrostatischen Prinzip oder G-Anzug (1), welcher aus einem hochfesten und dehnungsarmen textilen Gewebe gefertigt ist, mit flüssigkeitsgefüllten Adern (6), welche sich im Wesentlichen über die ganze Länge des G-Anzuges (1) erstrecken, mit einer Höhenschutzvorrichtung bestenend aus
- mindestens einer Spannungstasche (2) aus einem textilen Gewebe mit vergleichbaren Eigenschaften, wie jenem des G-Anzuges (1), welche mindestens entlang beider im Wesentlichen senkrecht zur Spannungsrichtung verlaufender Ränder kraftschlüssig mit diesem verbunden sind, so dass ein Aufblähen der Tasche (2) zu einer Verringerung der Distanz dieser vertikalen Verbindungen führt,
- je mindestens einer gasdichten Blase (4) pro Spannungstasche (2) bestehend aus einem elastischen Kunststoff,
**gekennzeichnet durch**
- mindestens eine Drucktasche (3) aus einem textilen, dehnungsarmen Gewebe, welche innen auf dem G-Anzug (1) entlang einer senkrecht auf der Spannungsrichtung stehenden Linie befestigt ist, so dass ein Aufblähen der Drucktasche (3) keine Wesentliche Änderung der Umfangsspannung des G-Anzugs (1) zur Folge hat,
- je mindestens eine gasdichte Blase (4) pro Drucktasche (3) bestehend aus einem elastischen Kunststoff.

2. Beschleunigungsschutzanzug nach Patentanspruch 1, **dadurch gekennzeichnet, dass** die mindestens zwei Blasen (4) ein Distanzgewirk (5) enthalten, welches ihnen auch unter mechanischer Belastung ein vorgegebenes Minimalvolumen zuweist.

3. Beschleunigungsschutzanzug nach Patentanspruch 2, **dadurch gekennzeichnet, dass** genau eine Spannungstasche (2) mit einer Blase (4) vorhanden und am Rückenteil des G-Anzuges (1) so befestigt ist, dass sie zwischen die an der Rückseite des G-Anzuges (1) verlaufenden Adern (6) zu liegen kommt und genau zwei Drucktaschen (3) mit jeweils einer Blase (4) vorhanden und im Bauchbereich auf der Innenseite des G-Anzuges (1) befestigt sind.

4. Beschleunigungsschutzanzug nach einem der Patentansprüche 1 bis 3, **dadurch gekennzeichnet, dass** die mindestens eine Spannungstasche (2) durch die in ihr liegende Blase (4) auf Meereshöhe teilweise ausgefüllt wird und somit die Blase (3) bei sinkendem Umgebungsdruck zuerst das Volumen der Spannungstasche (2) ausfüllt, ehe ihr Ausdehnen zu einer wesentlichen Erhöhung der Umfangsspannung des G-Anzugs (1) führt.

5. Beschleunigungsschutzanzug nach einem der Patentansprüche 2 bis 4, **dadurch gekennzeichnet, dass** mindestens eine Blase (4) mindestens einen Steg (7) aufweist, welcher bei Beaufschlagen der Blase (4) mit zunehmendem Druck die Ausdehnung derselben in der Stegebene verzögert.

6. Beschleunigungsschutzanzug nach einem der Patentansprüche 1 bis 5, **dadurch gekennzeichnet, dass** die mindestens eine Spannungstasche (2) und die darin enthaltene Blase (4) so dimensioniert sind, dass die Spannungstasche (2) erst ab einem Atmosphärendruck entsprechend der Höhe von 5'500 m.ü.M. bis 7'600 m.ü.M. wesentlich zu einer Erhöhung der Umfangsspannung des G-Anzugs (1) beiträgt.

7. Beschleunigungsschutzanzug nach einem der Patentansprüche 1 bis 6, **dadurch gekennzeichnet, dass** die mindestens eine Spannungstasche (2) und die mindestens eine Drucktasche (3) sowie die darin enthaltenen Blasen (4) so dimensioniert sind, dass die Spannungstasche (2) ab einem Atmosphärendruck entsprechend der Dienstgipfelhöhe des Luftfahrzeuges im Wesentlichen ihr Maximalvolumen erreichen.

8. Beschleunigungsschutzanzug nach einem der Patentansprüche 1 bis 7, **dadurch gekennzeichnet, dass** mindestens eine Blase (4) mit einem ausserhalb des G-Anzuges (1) angebrachten Zusatzvolumen verbunden ist, wobei bei abnehmendem Umgebungsdruck dieses Zusatzvolumen ab dem Erreichen eines vorgegebenen Umgebungsdruckes konstant bleibt, und die darin enthaltene Gasmenge im Weiteren ganz zum Spannungsaufbau in der Blase (4) beiträgt.

9. Beschleunigungsschutzanzug nach Patentanspruch 8, **dadurch gekennzeichnet, dass** das ausserhalb des G-Anzuges (1) angebrachte Zusatzvolumen aus einer in einer aus dehnungsarmem Gewebe gefertigten Zusatztasche (10) steckenden elastischen Zusatzblase (9) und einer Leitung (8) besteht, wobei die Leitung (8) die Zusatzblase (9) mit der Blase (4) verbindet.

10. Verwendung eines Beschleunigungsschutzanzuges nach einem der Patentansprüche 1 bis 9 als Höhenschutz für Besatzungsmitglieder hoch fliegender Fluggeräte.

## Claims

1. An acceleration protection suit according to the hydrostatic principle or a G-suit (1), which comprises a high-strength stretch-resistant woven textile fabric, comprising liquid-filled veins (6) that extend essentially along the entire length of the G-suit (1), with an altitude protection device comprising:
• at least one tension pocket (2) made from a textile fabric with characteristics that are comparable to those of the G-suit (1), which tension pocket (2) at least along both edges that extend essentially so as to be perpendicular to the direction of tension is in a non-positive way connected to said G-suit (1) so that inflation of the pocket (2) leads to a reduction in the distance of these vertical connections;
• in each case at least one gas-proof bladder (4) for each tension pocket (2), comprising an elastic plastic material;
**characterised by**
• at least one pressure pocket (3) made of a stretch-resistant textile fabric, which pressure pocket (3) is attached on the inside on the G-suit (1) along a line that is arranged so as to be perpendicular to the direction of tension so that inflation of the pressure pocket (3) does not result in any significant change in the circumferential tension of the G-suit (1); and
• in each case at least one gas-proof bladder (4) for each pressure pocket (3), comprising an elastic plastic material.

2. The acceleration protection suit according to claim 1, **characterised in that** the bladders (4), of which there are at least two, comprise a knitted distance fabric (5), which allocates to them a predetermined minimum volume even under mechanical load.

3. The acceleration protection suit according to claim 2, **characterised in that** there is precisely one tension pocket (2) with one bladder (4), which tension pocket (2) is attached to the back piece of the G-suit (1) in such a way that it comes to rest between the veins (6) that extend on the rear of the G-suit (1), and that there are precisely two pressure pockets (3), each with a bladder (4), attached in the stomach region on the inside of the G-suit (1).

4. The acceleration protection suit according to any one of claims 1 to 3, **characterised in that** the tension pocket (2), of which there is at least one, at sea level is partly filled by the bladder (4) arranged inside it, and thus, when the ambient pressure decreases, the bladder (3) first fills-in the volume of the tension pocket (2) before the expansion of said bladder (3) leads to a significant increase in the circumferential tension of the G-suit (1).

5. The acceleration protection suit according to any one of claims 2 to 4, **characterised in that** at least one bladder (4) comprises at least one bridge (7), which, when the bladder (4) is subjected to increased pressure, delays the expansion of said bladder (4) in the bridge plane.

6. The acceleration protection suit according to any one of claims 1 to 5, **characterised in that** the tension pocket (2), of which there is at least one, and the bladder (4) contained therein are dimensioned such that the tension pocket (2) significantly contributes to an increase in the circumferential tension of the G-suit (1) only from an atmospheric pressure that corresponds to an altitude of between 5,500 metres above sea level and 7,600 metres above seal level.

7. The acceleration protection suit according to any one of claims 1 to 6, **characterised in that** the tension pocket (2), of which there is at least one, and the pressure pocket (3), of which there is at least one, as well as the bladders (4) contained therein, are dimensioned such that the tension pockets (2) essentially attain their maximum volume from an atmospheric pressure which corresponds to the maximum operational altitude of the aircraft.

8. The acceleration protection suit according to any one of claims 1 to 7, **characterised in that** at least one bladder (4) is connected to an additional volume arranged outside the G-suit (1), wherein, when the ambient pressure drops, this additional volume remains constant from the point of reaching a predefined ambient pressure, and, furthermore, the quantity of gas contained therein essentially contributes entirely to building up tension in the bladder (4).

9. The acceleration protection suit according to claim 8, **characterised in that** the additional volume arranged outside the G-suit (1) comprises an additional elastic bladder (9) that is accommodated in an additional pocket (10) made from a stretch-resistant textile fabric, and comprises a line (8), wherein the line (8) connects the additional bladder (9) with the bladder (4).

10. The use of an acceleration protection suit according to any one of claims 1 to 9 as altitude protection for crew members of high-flying aircraft.

## Revendications

1. Combinaison de protection contre l'accélération selon le principe hydrostatique ou combinaison anti-G (1) fabriquée dans un tissu textile très résistant et à faible extension, avec des veines (6) remplies de liquide lesquelles s'étendent essentiellement sur toute la longueur de la combinaison anti-G (1), avec un dispositif de protection d'altitude se composant
- au moins d'une poche de tension (2) en tissu textile aux propriétés comparables à celles de la combinaison anti-G (1), laquelle est au moins reliée par adhérence sur le long de deux bords se profilant essentiellement verticalement au sens de tension, de façon à ce qu'un gonflement de la poche (2) conduise à une réduction de la distance entre ces liaisons verticales,
- au moins un soufflet (4) étanche aux gaz par poche de tension (2) composé en un plastique élastique,
**caractérisée par**
- au moins respectivement une poche de pression (3) en tissu textile à faible extension, laquelle est fixée à l'intérieur sur la combinaison anti-G (1) le long d'une ligne placée verticalement au sens de tension, de façon à ce qu'un gonflement de la poche de pression (3) ne conduise pas à une modification importante de la tension périmétrique de la combinaison anti-G (1), au moins respectivement un soufflet (4) étanche aux gaz par poche de pression (3) composé en un plastique élastique.

2. Combinaison de protection contre l'accélération selon la revendication 1, **caractérisée en ce que** les au moins deux soufflets (4) comportent un tissu maillé de distance (5), lequel leur permet un volume minimal prédéfini même en cas de contrainte mécanique.

3. Combinaison de protection contre l'accélération selon la revendication 2, **caractérisée en ce que** précisément une poche de tension (2) avec un soufflet (4) est présente et fixée sur l'arrière de la combinaison anti-G (1), de façon à ce qu'elle vienne reposer entre les veines (6) se profilant sur l'arrière de la combinaison anti-G (1) et précisément deux poches de pression (3) avec chacune un soufflet (4) sont présentes et fixées sur la partie ventrale à l'intérieur de la combinaison anti-G (1).

4. Combinaison de protection contre l'accélération selon l'une des revendications 1 à 3, **caractérisée en ce que** l'au moins une poche de tension (2) est partiellement remplie au niveau de la mer par le soufflet (4) placé à l'intérieur de celle-ci et qu'ainsi le soufflet (4) en cas de baisse de la pression environnante remplit d'abord le volume de la poche de tension (2) avant que son extension ne conduise à une augmentation importante de la tension périmétrique de la combinaison anti-G (1).

5. Combinaison de protection contre l'accélération selon l'une des revendications 2 à 4, **caractérisée en ce qu'**au moins un soufflet (4) présente au moins une traverse (7), laquelle retarde l'extension du soufflet (4) dans la zone de traverse en cas d'alimentation de celui-ci avec une pression croissante.

6. Combinaison de protection contre l'accélération selon l'une des revendications 1 à 5, **caractérisée en ce que** l'au moins une poche de tension (2) et le soufflet (4) contenu dedans sont dimensionnés de façon à ce que la poche de tension (2) ne participe essentiellement à une augmentation de la tension périmétrique de la combinaison anti-G (1) qu'à partir seulement d'une pression atmosphérique correspondant à l'altitude de 5 500 AMSL à 7 600 AMSL.

7. Combinaison de protection contre l'accélération selon l'une des revendications 1 à 6, **caractérisée en ce que** l'au moins une poche de tension (2) et l'au moins une poche de pression (3) ainsi que les soufflets (4) contenus dedans sont dimensionnés de façon à ce que la poche de tension (2) atteigne son volume principal essentiellement à partir seulement d'une pression atmosphérique correspondant au plafond d'altitude de l'aéronef.

8. Combinaison de protection contre l'accélération selon l'une des revendications 1 à 7, **caractérisée en ce qu'**au moins un soufflet (4) est relié à un volume supplémentaire placé à l'extérieur de la combinaison anti-G (1), moyennant quoi lorsque la pression environnante baisse, ce volume supplémentaire reste constant lorsqu'il a atteint une pression environnante prédéfinie, et que la quantité de gaz contenue dedans participe en outre totalement à la réalisation de la tension dans le soufflet (4).

9. Combinaison de protection contre l'accélération selon la revendication 8, **caractérisée en ce que** le volume supplémentaire placé à l'extérieur de la combinaison anti-G (1) est composé d'un soufflet supplémentaire (9) élastique placé dans une poche supplémentaire (10) fabriquée en tissu à faible extension et une conduite (8), moyennant quoi la conduite (8) relie le soufflet supplémentaire (9) au soufflet (4).

10. Application d'une combinaison de protection selon l'une des revendications 1 à 9 comme protection d'altitude pour les occupants d'avions volant à très haute altitude.
